**Europäisches Patentamt**

**European Patent Office**

**Office européen des brevets**

(11) Veröffentlichungsnummer: **0 224 467**
**A2**

## (12) EUROPÄISCHE PATENTANMELDUNG

(21) Anmeldenummer: **86890302.2**

(22) Anmeldetag: **05.11.86**

(51) Int. Cl.⁴: **F 16 N 13/16**
**G 06 M 1/12**

(30) Priorität: **26.11.85 AT 3448/85**

(43) Veröffentlichungstag der Anmeldung:
**03.06.87 Patentblatt 87/23**

(84) Benannte Vertragsstaaten:
**DE FR IT**

(71) Anmelder: **HOERBIGER VENTILWERKE
AKTIENGESELLSCHAFT**
**Braunhubergasse 23**
**A-1110 Wien(AT)**

(72) Erfinder: **Lueger, Karl**
**Meidlgasse 39/2/10**
**A-1110 Wien(AT)**

(74) Vertreter: **Klein, Adam, Dipl.Ing.**
**Fasangasse 49**
**A-1030 Wien(AT)**

(54) Druckimpulsbetätigter mechanischer Zähler.

(57) Es ist ein durch Eingangs-Druckimpulse hin und her bewegter Betätigungskolben vorgesehen, der eine konzentrische Ringnut mit beidseitig sägezahnartig ausgeführten Nutwänden aufweist, wobei die Sägezähne beider Nutwände eine in die gleiche Umfangsrichtung weisende Schräglage und gleiche Teilung aufweisen und die beiden Zahnreihen jeweils um etwa die halbe Teilung versetzt sind. An einem gegenüber dem Betätigungskolben in dessen Bewegungsrichtung feststehenden Bauteil sind mit den Sägezähnen der Ringnut zusammenwirkende Schaltstiffte vorgesehen, die die hin- und hergehende Bewegung des Betätigungskolbens in eine schrittweise Relativverdrehung zwischen den beiden Bauteilen umsetzen. Ein am Betätigungskolben angebrachtes Rückschlagventil wird in einer definierten Relativstellung der beiden schrittweise gegeneinander verdrehten Bauteile geöffnet, sodaß sich auf einfache und zuverlässige Weise eine Untersetzung der Eingangsimpulse zu einem bei geöffnetem Rückschlagventil vom Eingangsimpuls beaufschlagten Ausgang hin ergibt.

FIG.1

EP 0 224 467 A2

2

Die Erfindung betrifft einen druckimpulsbetätigten mechanischen Zähler, mit einem vom Druckimpuls gegen die Kraft einer Rückstellfeder in einem mit einer Druckmittelzuleitung versehenen Gehäuse bewegbaren Betätigungskolben, der in Zusammenwirkung mit einer Rasteinrichtung eine schrittweise Relativverdrehung von zwei Sperrteilen eines Absperrorgans bewirkt, wobei das Absperrorgan den Durchlaß zu einer Druckmittelableitung in einer definierten Relativstellung der Rasteinrichtung freigibt und ansonsten absperrt.

Aus der DE-PS 17 75 703 ist eine Einrichtung der genannten Art bekannt, die dort dazu dient, ein Ventil in einer Schmieranlage zu betätigen, welches in Abhängigkeit von der Bewegung des zu schmierenden Teiles den Druckmittelstrom für den Antrieb einer Schmierpumpe steuert. Bei jedem der üblicherweise bei derartigen Verwendungen etwa periodisch auftretenden Druckimpulse wird die lineare Bewegung des Betätigungskolbens über gegeneinander geneigt angeordnete Führungsbahnen zweier hülsenförmiger Bauteile mit damit zusammenwirkenden Führungsstiften in eine schrittweise Verdrehung des Betätigungskolbens umgewandelt, wobei die Rückdrehung jeweils über Sperrfedern verhindert wird. Mittels mit dem Betätigungskolben auf diese Weise drehgekuppelter Kurven- bzw. Nockenbahnen wird die hin - und hergehende Bewegung des Betätigungskolbens auf diese Weise in einem bestimmten, einstellbaren Verhältnis untersetzt auf das eigentlich zu steuernde Ventil übertragen, welches damit einen vom Ausmaß der jeweiligen Einzelverdrehungen des Betätigungskolbens abhängigen, gegenüber dem Betätigungskolben verlängerten Umschaltzyklus zwischen seinen Endstellungen hat.

Nachteilig bei der genannten bekannten Anordnung ist neben dem komplizierten und vielteiligen Aufbau insbesonders die Tatsache, daß zufolge der Betätigung des zu steuernden Ventils über die Kurvenscheiben praktisch ständig irgendwelche Zwischenstellungen dieses Ventils auftreten und somit eine exakte Untersetzung im Sinne einer Zuordnung jedes n-ten Eingangsimpulses zu einem Ausgangsimpuls nicht möglich ist.

Weiters ist beispielsweise aus der DE-OS 31 02 474 eine Anordnung der eingangs genannten Art bekannt geworden, bei der jeder Eingangsdruckimpuls über den Betätigungskolben, der über eine Art Stoßstange mit einem Klinkenrad zusammenwirkt, eine schrittweise Verdrehung einer mit einer Durchlaßöffnung versehenen Sperrscheibe gegenüber einem Gehäusewandteil verursacht, wobei dieser Gehäusewandteil eine in einer Stellung mit der Durchlaßöffnung des Sperrteils korrespondierende Öffnung aufweist. Auf diese Weise wird zwar eine exakte Untersetzung der Eingangsimpulsrate dahingehend erreicht, daß jedem n-ten Eingangsdruckimpuls (wobei n hier die Anzahl der Zähne am Klinkenrad bedeutet) ein definierter Ausgangsdruckimpuls zugeordnet ist, wobei aber zufolge der sich in ständiger Relativbewegung zueinander befindenden Sperrteile ziemliche Probleme mit der Abdichtung auftreten, da diese naturgemäß insbesondere bei höheren Impulsraten einem hohen Verschleiß unterliegt.

Aufgabe der vorliegenden Erfindung ist es, einen Zähler der eingangs genannten Art so zu verbessern, daß die genannten Nachteile der bekannten Anordnungen nicht auftreten und daß insbesondere auf konstruktiv einfache und betriebssichere Weise eine genaue Untersetzung der Druckimpulse am Eingang des Zählers möglich wird, wobei zwischen dem Durchschalten des Zählers, also zwischen dem Auftreten der Ausgangsdruckimpulse, mit einfachen Mitteln die Dichtheit der Anordnung gewährleistet sein soll.

Gemäß der vorliegenden Erfindung ist zur Lösung der genannten Aufgabe vorgesehen, daß am Betätigungskolben - bzw. an einem demgegenüber in Bewegungsrichtung des Betätigungskolbens feststehenden Bauteil - eine konzentrisch zur Achse des Betätigungskolbens verlaufende Ringnut mit sägezahnartig ausgebildeten Nutwänden vorgesehen ist, wobei die Sägezähne beider Nutwände eine in die gleiche Umfangsrichtung der Ringnut weisende Schräglage und gleiche Teilung aufweisen und wobei die beiden Zahnreihen gegeneinander versetzt sind und in Zusammenwirkung mit zumindest einem an einem gegenüber dem Betätigungskolben in dessen Bewegungsrichtung feststehenden Bauteil - bzw. am Betätigungskolben - angeordneten Schaltstift bei jedem Hub des Betätigungskolbens eine Relativverdrehung der die Ringnut bzw. den Schaltstift tragenden Bauteile um einen dem Ausmaß der Versetzung der beiden Zahnreihen entsprechenden Winkel bewirken, und daß weiters der erste Sperrteil des Absperrorgans, das vorzugsweise als Rückschlagventil ausgeführt ist, von einem exentrisch zur Achse des Betätigungskolbens angeordneten und mit einem im Betätigungskolben ausgebildeten Ventilsitz zusammenwirkenden Ventilkörper und dessen zweiter Sperrteil von einem relativ zum Gehäuse in Bewegungsrichtung des Betätigungskolbens feststehenden und in der definierten Stellung der Rasteinrichtung mit dem Ventilkörper zusammenwirkenden Öffnungsanschlag gebildet ist. Mit dieser Anordnung ist sichergestellt, daß die hin- und hergehende Bewegung des Betätigungskolbens unmittelbar zu einer Relativverdrehung zwischen diesem Kolben, der das exentrisch angeordnete Absperrorgan trägt, und dem den Öffnungsanschlag tragenden Bauteil führt. Diese Funktionsweise ist unabhängig davon, ob die in der genannten Weise ausgebildete konzentrische Ringnut an dem abhängig von den Eingangs-Druckimpulsen hin- und hergehenden Kolben angeordnet ist und mit einem - oder mehreren - in Bewegungsrichtung des Betätigungskolbens relativ zum Gehäuse feststehenden Schaltstiften zusammenarbeitet, oder aber die Anordnung von Ringnut und Schaltstiften genau umgekehrt ausgeführt ist. Der Ventilkörper des Absperrorgans bleibt geschlossen auf dem zugehörigen im Betätigungskolben ausgebildeten Ventilsitz, solange die Relativverdrehung der beiden Bauteile nicht in der definierten Stellung der Rasteinrichtung zum Zusammenwirken mit dem Öffnungsanschlag führt. Es können auch derartige Öffnungsanschläge während einer gesamten Relativdrehung des Betätigungskolbens zum Einsatz kommen, was die Berücksichtigung verschiedenster Anforderungen an den druckimpulsbetätigten mechanischen Zähler erlaubt. Da das Absperrorgan im Betätigungskolben nur beim Zusammenwirken mit dem Öffnungsanschlag von seinem Sitz abgehoben wird, sind auch bei hohen Impulsraten und Dauerbetrieb keine Undichtheiten dieses Absperrorgans zu befürchten, was exakte Ausgangsimpulse sicherstellt.

Der Betätigungskolben ist nach einer vorteilhaften Ausgestaltung der Erfindung hutförmig ausgebildet, wobei die Ringnut im Bereich seines inneren unteren Endes angeordnet ist. Diese konstruktiv einfache und eine kompakte Bauweise des Zählers sicherstellende Ausbildung ist insbesonders im Zusammenhang mit einer weiteren bevorzugten Ausgestaltung der Erfindung von besonderem Vorteil, gemäß welcher der Betätigungskolben im Bereich der Ringnut senkrecht zu seiner Achse geteilt ist, wobei die beiden Teile jeweils eine der sägezahnartig ausgebildeten Nutwände der Ringnut aufweisen. Es wird damit eine einfache Herstellbarkeit bzw. Montierbarkeit des Betätigungskolbens ermöglicht, der nach dem getrennten Herstellen der die beiden Nutwände aufweisenden Teile zusammengefügt und etwa durch Verschrauben, Verkleben, Verschweißen oder andere geeignete bekannte Methoden zusammengebaut werden kann.

Nach einer weiteren vorteilhaften Ausgestaltung der Erfindung ist vorgesehen, daß der Schaltstift an einem in den Innenraum des Betätigungskolbens hineinragenden, mit dem Gehäuse in Bewegungsrichtung des Betätigungskolbens feststehenden Mittelteil angeordnet ist, der auch den Öffnungsanschlag für den Ventilkörper trägt. Diese Ausbildung ermöglicht einerseits eine einfachere Herstellung und andererseits die optimale Ausnutzung des durch die hutförmige Ausbildung des Betätigungskolbens gegebenen Vorteils der kompakten Bauweise.

Besonders im Zusammenhang mit der letztgenannten Ausbildung ist in weiterer vorteilhafter Ausgestaltung der Erfindung vorgesehen, daß der Mittelteil relativ zum Gehäuse über eine O-Ringdichtung abgedichtet und um seine Achse verdrehbar ist und die Rückstellfeder für den Betätigungskolben abstützt. Auf diese Weise können sich der Betätigungskolben und der über die Sägezähne der beiden Nutwände einerseits und den Schaltstift bzw. die Schaltstifte andererseits gekuppelte Mittelteil im Gehäuse drehen, wobei aber die zur gewünschten Impuls-Untersetzung erforderliche Relativkopplung der beiden Bauteile stets gesichert ist.

Der Innenraum des Betätigungskolbens ist nach einer anderen, besonders bevorzugten Ausgestaltung der Erfindung in der bei Druckbeaufschlagung eingenommenen unteren Totstellung des Betätigungskolbens gegenüber dem Gehäuse bzw. dem Mittelteil abgedichtet. Dies hat zur Folge, daß auch in der geöffneten Stellung des Absperrorgans -also wenn der Ventilkörper mit dem Öffnungsanschlag zusammenwirkt und damit der am Eingang bzw. an der Oberseite des Betätigungskolbens anstehende Druck auch im Innenraum des Betätigungskolbens herrscht-der Betätigungskolben zufolge der größeren Fläche an seiner Eingangs-bzw. Oberseite solange in der unteren Totstellung verbleibt, bis der eingangseitige Druckimpuls wieder verschwindet. Damit ist die Ausgangsimpulsform im wesentlichen gleich der Form des n-ten Eingangsimpulses.

Zumindest der Betätigungskolben kann nach einer weiters bevorzugten Ausgestaltung der Erfindung als Kunststoff-Spritzteil ausgebildet und an seinem Außenumfang mit einer mit der Innenwand des Gehäuses zusammenwirkenden O-Ringdichtung versehen sein, was nicht nur eine einfache und kostengünstige Herstellbarkeit erlaubt, sondern auch die auftretenden Massenkräfte zu reduzieren hilft, was das Betriebsgeräusch des Zählers senkt und verringerte Abnützung sicherstellt.

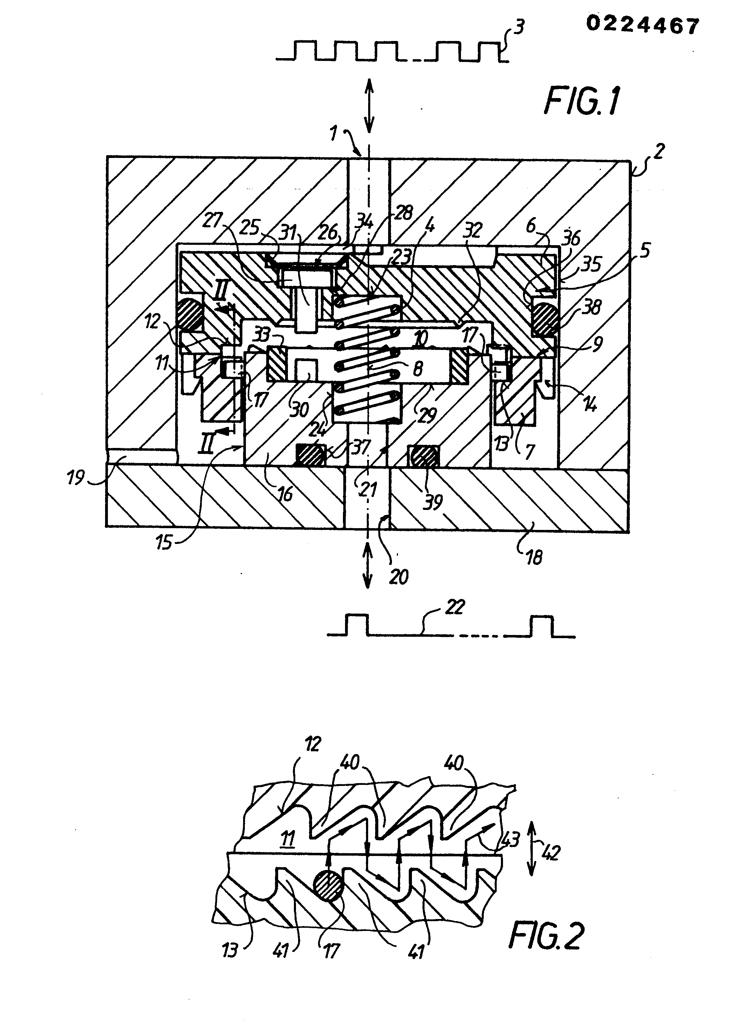

Die Erfindung wird im folgenden an Hand des in der Zeichnung dargestellten Ausführungsbeispiels näher erläutert. Fig. 1 zeigt einen Querschnitt durch den erfindungsgemäßen Zähler und Fig. 2 zeigt einen teilweisen Schnitt entlang der Linie II-II in Fig. 1 im Bereich der Ringnut in abgewickelter Darstellung.

In einem mit einer Druckmittelzuleitung 1 versehenen Gehäuse 2 ist ein über Druckimpulse - beispielsweise hydraulische oder pneumatische Impulse entsprechend dem mit 3 bezeichneten Impulszug an der Oberseite der Fig. 1 - gegen die Kraft einer Rückstellfeder 4 bewegbarer Betätigungskolben 5 angeordnet, der im dargestellten Ausführungsbeispiel im wesentlichen hutförmig ausgebildet ist und aus einem oberen Teil 6 und einem unteren Teil 7 besteht. Im Bereich der senkrecht zur Achse 8 des Betätigungskolbens 5 liegenden Trennfuge 9 zwischen den Teilen 6 und 7 ist dem Innenraum 10 des Betätigungskolbens 5 zugewandt eine konzentrisch zur Achse 8 verlaufende Ringnut 11 angeordnet, die mit sägzahnartig ausgebildeten Nutwänden 12, 13 (siehe auch Fig 2) versehen ist. Zur Vereinfachung von Herstellung und Montage der gesamten Anordnung ist die obere Nutwand 12 im oberen Teil 6 und die untere Nutwand 13 im unteren Teil 7 des Betätigungskolbens 5 ausgebildet.

Die Verbindung zwischen den beiden Teilen 6, 7 des Betätigungskolbens 5 erfolgt im dargestellten Beispiel über eine Schnappverbindung 14, wobei aber durchaus auch andere gängige Möglichkeiten, wie etwa Kleben, Schweißen, Verschrauben, oder dergleichen, zur Herstellung dieser Verbindung in Frage kommen.

An einem gegenüber dem Betätigungskolben 5 in dessen möglicher Bewegungsrichtung entlang der Achse 8 feststehenden Bauteil 15 - der hier als in den Innenraum 10 des Betätigungskolbens 5 hineinragender separater

Mittelteil 16 ausgebildet ist, sind Schaltstifte 17 angeordnet, welche auf untenstehend noch an Hand der Fig. 2 beschriebene Weise in Zusammenwirkung mit den Nutwänden 12, 13 der Ringnut 11 bei jedem Hub des Betätigungskolbens 5 eine Raltivverdrehung von Betätigungskolben 5 und Mittelteil 16 um die Achse 8 bewirken.

Das Gehäuse 2 ist an der der Druckmittelzuleitung 1 abgewandten Seite mit einem Deckel 18 abgeschlossen, der auf hier nicht dargestellte Weise am Gehäuse 2 befestigt ist, wobei eine Entlüftungsöffnung 19 zur Druckentlastung des Innenraumes vorgesehen ist. Zentral im Deckel 19 ist eine Druckmittelableitung 20 vorgesehen, welche mit einer zentralen Bohrung 21 im Mittelteil 16 korrespondiert und die Ausgangs-Druckimpulse – hier angedeutet durch den Impulszug 22 auf der unteren Seite von Fig. 1 – führt. Wenn der Deckel 18 am Gehäuse 2 aufgesetzt ist und die Druckmittelzuleitung 1 keinen bzw. nur einen dem unteren Druckniveau des Impulszuges 3 entsprechenden Druck führt, sind der Betätigungskolben 5 und naturgemäß auch der Mittelteil 16 zufolge der zwischen diesen Teilen wirkenden und in Ausnehmungen 23, 24 geführten Rückstellfeder 4 in Anlage am Gehäuse 2, wie dies der gezeichneten Darstellung entspricht.

Exzentrisch zur Achse 8 ist im Betätigungskolben 5 bzw. in dessen oberem Teil 6/von einem Federring 25 gehaltenes, als Absperrorgan zwischen der Druckmittelzuleitung 1 und der Druckmittelableitung 20 wirkendes Rückschlagventil 26 angeordnet. Dieses weist einen parallel zur Achse 8 des Betätigungskolbens 5 liegenden Ventilkörper 27 und einen im Betätigungskolben 5 ausgebildeten Ventilsitz 28 auf und ist im Normalfall geschlossen. In der zentralen Ausbuchtung 29 des Mittelteils 16 ist ein Öffnungsanschlag 30 angeordnet, der den gleichen Abstand zur Achse 8 des Betätigungskolbens 5 aufweist wie der Ventilkörper 27. Die axiale Erstreckung des Öffnungsanschlags 30 bzw. des

Ansatzes 31 am Ventilkörper 27 ist bezogen auf die sonstige Ausbildung des Zählers und insbesonders auf den möglichen Hub des Betätigungskolbens 5 so ausgelegt, daß diese beiden genannten Teile nur in einer definierten relativen Verdrehstellung zwischen Betätigungskolben 5 und Mittelteil 16 bei zufolge eingangsseitig entsprechend angestiegenem Druck nach unten gehendem Betätigungskolben 5 zum Öffnen des Rückschlagventils 26 zusammenwirken; in den übrigen möglichen Relativstellungen zwischen Betätigungskolben 5 und Mittelteil 16 stößt der Ansatz 31 des Ventilkörpers 27 auch in der unteren Endstellung des Betätigungskolbens 5 nirgends am Mitteilteil 16 an, sodaß das Rückschlagventil 26 geschlossen bleibt.

Der Innenraum 10 des Betätigungskolbens 5 ist in der bei Druckbeaufschlagung von der Druckmittelzuleitung 1 her eingenommenen unteren Totstellung des Betätigungskolben 5 mittels einer Dichtleiste 32 am Betätigungskolben 5 und einer Dichtung 33 in der Ausbuchtung 29 des Mittelteils 16 abgedichtet, sodaß auch in der geöffneten Stellung des Ventilkörpers 27 der Betätigungskolben 5 zufolge der an seiner Oberseite größeren wirksamen Fläche solange in der unteren Totlage verbleibt, bis eingangsseitig wieder der Druck weggenommen wird. Hinsichtlich des dazu erforderlichen Unterschieds im Durchmesser der Dichtleiste 32 einerseits und des Außenumfangs des Betätigungskolbens 5 andererseits muß natürlich auch die von der Rückstellfeder 4 ausgeübte Kraft in Betracht gezogen werden.

Um von der Ausgangseite her eine Druckentlastung über das Rückschlagventil 26 zur Eingangsseite hin zu ermöglichen, sind an der Oberseite des Betätigungskolbens 5 entsprechende Ausnehmungen 34 vorgesehen, welche ein dichtes Anliegen an der Innenseite des Gehäuses 2 in der oberen Totlage des Betätigungskolbens 5 verhindern. Zur Abdichtung des Betätigungskolbens 5 gegenüber der Innenwand 35 des Gehäuses 2 bzw. des Mittelteiles 16 gegenüber dem Deckel 18 sind in Ausnehmungen 36, 37 der jeweils erstgenannten Teile O-Ringdichtungen 38, 39 eingelegt.

In Fig. 2 ist zu ersehen, daß die Sägezähne 40, 41 der beiden Nutwände 12, 13 eine in die gleiche Umfangsrichtung der Ringnut 11 weisende Schräglage und gleiche Teilung aufweisen, wobei die beiden Zahnreihen z.B. um etwa die halbe Teilung gegeneinander in Umfangsrichtung versetzt sind. Auf diese Weise führt eine durch den Impulszug 3 an der Druckmittelzuleitung 1 (siehe Fig. 1) bewirkte hin- und hergehende Bewegung des die Ringnut 11 tragenden Betätigungskolbens entlang des Doppelpfeils 42 zu einer erzwungenen Relativbewegung der Stifte 17 am Mittelteil 16 (siehe Fig. 1) in der Ringnut 11, wie sie durch den Pfeilzug 43 in Fig. 2 angedeutet ist. Es kommt somit bei jedem Hub des Betätigungskolbens 5 zu einer schrittweisen Relativverdrehung desselben zum Mitteilteil 16 um einen jeweils dem Ausmaß der Versetzung der beiden Zahnreihen 12, 13 entsprechenden Winkel, wobei selbstverständlich sichergestellt sein muß, daß die entlang des Pfeilzugs 43 erfolgende Relativbewegung der Schaltstifte 17 nicht durch einen zu engen Abstand der Nutwände 12, 13 behindert wird.

Nach Durchlaufen einer durch die Anzahl der Zähne 40, 41 an den Nutwänden 12, 13 der Ringnut 11 bestimmten Anzahl von Auf- und Abbewegungen des Betätigungskolbens 5 bzw. der entsprechenden Anzahl von Druckimpulsen an der Druckmittelzuleitung 1 wird durch die dargestellte Anordnung ein Ausgangsimpuls an der Druckmittelableitung 20 abgegeben, wobei das Untersetzungsverhältnis zwischen den Impulszügen 3, 22 nicht nur über die Anzahl der Sägezähne der Ringnut, sondern auch über das Anbringen von weiteren Öffnungsanschlägen 30 auf dem Weg des Ansatzes 31 des Ventilkörpers 27 variiert und sogar durch unsymmetrisch Anordnung von mehreren Öffnungsanschlägen 30 unsymmetrisch gestaltet werden kann.

11

Bei der dargestellten Ausführung werden vorteilhafterweise zumindest die beiden Teile des Betätigungskolbens 5 und der Mittelteil 16 als Kunststoffspritzteil ausgebildet, was eine einfache Herstellung ermöglicht und zufolge der dadurch geringen Masse des hin- und hergehenden Betätigungskolbens auch Vorteile im Betrieb bzw. höhere Standfestigkeit ergibt.

Patentansprüche:

Patentansprüche:

1. Druckimpulsbetätigter mechanischer Zähler, mit einem vom Druckimpuls gegen die Kraft einer Rückstellfeder in einem mit einer Druckmittelzuleitung versehenen Gehäuse bewegbaren Betätigungskolben, der in Zusammenwirkung mit einer Rasteinrichtung eine schrittweise Relativverdrehung von zwei Sperrteilen eines Absperrorgans bewirkt, wobei das Absperrorgan den Durchlaß zu einer Druckmittelableitung in einer definierten Relativstellung der Rasteinrichtung freigibt und ansonsten absperrt, d a d u r c h  g e k e n n z e i c h n e t , daß am Betätigungskolben (5) - bzw. an einem demgegenüber in Bewegungsrichtung des Betätigungskolbens feststehenden Bauteil - eine konzentrisch zur Achse (8) des Betätigungskolbens (5) verlaufende Ringnut (11) mit sägezahnartig ausgebildeten Nutwänden (12,13) vorgesehen ist, wobei die Sägezähne (40,41) beider Nutwände (12, 13) eine in die gleiche Umfangsrichtung der Ringnut (11) weisende Schräglage und gleiche Teilung aufweisen und wobei die beiden Zahnreihen gegeneinander versetzt sind und im Zusammenwirkung mit zumindest einem an einem gegenüber dem Betätigungskolben (5) in dessen Bewegungsrichtung feststehenden Bauteil (15) - bzw. am Betätigungskolben - angeordneten Schaltstift (17) bei jedem Hub des Betätigungskolbens (5) eine Relativverdrehung der die Ringnut (11) bzw. den Schaltstift (17) tragenden Bauteile um einen dem Ausmaß der Versetzung der beiden Zahnreihen entsprechenden Winkel bewirken, und daß weiters der erste Sperrteil des Absperrorgans, das vorzugsweise als Rückschlagventil (26) ausgeführt ist, von einem exentrisch zur Achse (8) des Betätigungskolbens (5) angeordneten und mit einem im Betätigungskolben (5) ausgebildeten Ventilsitz (28) zusammenwirkenden Ventilkörper (27) und dessen zweiter Sperrteil von einem relativ zum Gehäuse (2) in Bewegungsrichtung des Betätigungskolbens (5) feststehenden und in der definierten Stellung der Rasteinrichtung mit dem Ventilkörper (27) zusammenwirkenden Öffnungsanschlag (30) gebildet ist.

2. Zähler nach Anspruch 1, dadurch gekennzeichnet, daß der Betätigungskolben (5) hutförmig ausgebildet und die Ringnut (11) im Bereich seines inneren, unteren Endes angeordnet ist.

3. Zähler nach Anspruch 2, dadurch gekennzeichnet, daß der Betätigungskolben (5) im Bereich der Ringnut (11) senkrecht zu seiner Achse (8) geteilt ist, wobei die beiden Teile (6, 7) jeweils eine der sägezahnartig ausgebildeten Nutwände (12, 13) der Ringnut (11) aufweisen.

4. Zähler nach einem der Ansprüche 2 oder 3, dadurch gekennzeichnet, daß der Schaltstift (17) an einem in den Innenraum (10) des Betätigungskolbens (5) hineinragenden, mit dem Gehäuse (2) in Bewegungsrichtung des Betätigungskolbens (5) feststehenden Mittelteil (16) angeordnet ist, der auch den Öffnungsanschlag (30) für den Ventilkörper (27) trägt.

5. Zähler nach Anspruch 4, dadurch gekennzeichnet, daß der Mittelteil (16) relativ zum Gehäuse (2) über eine O-Ringdichtung (39) abgedichtet und um seine Achse verdrehbar ist und die Rückstellfeder (4) für den Betätigungskolben (5) abstützt.

6. Zähler nach einem der Ansprüche 2 bis 5, dadurch gekennzeichnet, daß der Innenraum (10) des Betätigungskolbens (5) in der bei Druckbeaufschlagung eingenommenen unteren Totstellung des Betätigungskolbens (5) gegenüber dem Gehäuse (2) bzw. dem Mittelteil (16) abgedichtet ist.

7. Zähler nach einem der Ansprüche 1 bis 6, dadurch gekennzeichnet, daß zumindest der Betätigungskolben (5) als Kunststoff-Spritzteil ausgebildet und an seinem Außenumfang mit einer mit der Innenwand (35) des Gehäuses (2) zusammenwirkenden O-Ringdichtung (38) versehen ist.

0224467

FIG.1

FIG.2